# EUROPEAN PATENT SPECIFICATION

(11) **EP 2 280 244 B1**
(45) Date of publication and mention of the grant of the patent: **19.12.2012**
(21) Application number: 10170963.2
(22) Date of filing: 27.07.2010
(51) Int. Cl.: G01C 21/36, G08G 1/0968

(54) **Method for simulating navigation route, navigation apparatus and computer program product**
Verfahren zur Simulation einer Navigationsroute, Navigationsvorrichtung und Computerprogrammprodukt
Procédé de simulation de navigation routière, appareil de navigation et produit de programme informatique

(30) Priority: 27.07.2009 US 228957 P; 31.12.2009 TW 98146406
(43) Date of publication of application: 02.02.2011
(73) Proprietor: HTC Corporation, Taoyuan County 330 (TW)
(72) Inventor: Lee, Yu-Cheng, 330, Taoyuan City, Taoyuan County (TW)
(74) Representative: Schultenkämper, Johannes

(56) References cited:
- WO-A1-2010/040389
- DE-A1-102008 057 372
- JP-A- 2008 185 522
- US-A- 5 541 592
- US-A1- 2001 020 211
- US-A1- 2006 103 674
- US-A1- 2007 225 902
- US-A1- 2008 046 178

## Description

### BACKGROUND

The conventional navigation apparatus has a built-in smart electronic map and can execute functions of route planning and navigation. The user is only required to input a name or a coordinate of a destination to leave for, or directly select a particular location on the electronic map, and then the navigation apparatus automatically plans a navigation route based on the detected location and a geographical location of the destination input by the user, and delivers a voice message to guide the user to the destination along the planned navigation route.

When displaying the navigation route, if the distance between the start point and the end point of the navigation route is too long, the map displayed by the navigation apparatus may cover a larger range and is not able to reveal the details of the map. However, when a user activates the navigation function, in order to show the details of the map nearby the area where the user is located, the navigation apparatus adjusts the display scale of the map and navigation route to the area nearby the apparatus, so as to increase the readability of the map.

Through the aforesaid method for adjusting the display scale of the map, the navigation apparatus can only display a portion of the navigation route when executing the navigation function. However, in the process of navigation, if the user intends to browse the whole navigation route, the user has to adjust the display scale of the map manually. Even if the adjusted map can show the whole navigation route, the user still cannot know the actual road condition, such as where to make a turn or where it is jammed. Therefore, there is a need to provide a navigation route simulation method that can truly reflect the actual road condition, such that the user can activate freely to catch the whole and actual road condition.

From US 2001/020211 A1 a method for simulating a navigation route is known, the method being suitable for mobile device and comprises the steps of planning a navigation route and displaying the navigation route on an electronic map. A route simulation mode is entered for generating an effect of moving a navigation icon along the navigation route from a spot. The navigation icon is moved in a first speed when a guide is not presented, because of a situation where the icon is moved on a straight path of the navigation route. The icon is moved in a second speed when the guide is presented, because of a situation where the icon is moved on a turning point of the navigation route, wherein the second speed is less than the first speed. Thus the speed of moving the icon is accelerated when no guide is needed, e.g. when the icon is moved on a straight path. Therefor the overall simulation time can be speeded up. However, the fast moving icon may hinder the user to catch whole and actual road condition.

JP 2008 185522 A discloses a navigation device including a route acquiring means for acquiring a route from an origin to a destination, a main point selection receiving means for list-displaying main points (for example, guidance points) on the route acquired by the route acquiring means and receiving the selection of one of the main points, a demonstration start point setting means for setting a start point in the demonstration display of the route guidance before a predetermined distance from one of the main points received by the main point selection receiving means on the route acquired by the route acquiring means, and a demonstration displaying means for performing the demonstration display of the route guidance by moving the mark showing the current position along the route from the start point set by the demonstration start point setting means, and displaying it. However, there is still a need to provide a navigation route simulation method that can truly reflect the actual road condition, such that the user can activate freely to catch the whole and actual road condition.

### SUMMARY

Therefore the object of the present invention is to provide a method and a system for simulating a navigation route which can truly reflect the actual road condition, such that the user can activate freely to catch the whole and actual road condition.

The object is solved by a method comprising the features of claim 1 and by a system comprising the features of claim 7.

Accordingly a method for simulating a navigation route is defined wherein the navigation icon is displayed in a form of floating above the navigation route, and wherein the step of moving the navigation icon in the second speed when the navigation icon is moved on the turning point of the navigation route further comprises:
tilting the electronic map to the right by a tilting angle when the navigation icon is moved on a left-turning point of the navigation route; and
tilting the electronic map to the left by the tilting angle when the navigation icon is moved on a right-turning point of the navigation route.

By displaying the navigation icon in the form of floating above the navigation route, it is achieved to present the user the same effect as displaying in the form of three-dimensional bird eye view. Further, by adjusting the tilting angle of the electronic map, it is achieved to simulate the navigation route through looking down from above.

Thus the application provides a method for simulating navigation route, which adjusts a moving speed of the navigation icon according to the type or the state of the path, so as to simulate the actual road condition, and which achieves the same effect as displaying in the form of three-dimensional bird eye view. Thus the user can truly reflect the actual road condition, such that the user can activate freely to catch the whole and actual road condition.

The application also provides a navigation route simulation system, in which the moving speed of a navigation icon is reduced when encountering a turning point or a jammed section, so as to remind the user of paying attention.

The application provides a method for simulating a navigation route, suitable for a mobile device having a screen. In the method, a navigation route is planned and displayed on an electronic map. When a route simulation mode is entered, an effect of moving a navigation icon along the navigation route from a spot of the navigation route is generated. When the navigation icon is moved on a straight path of the navigation route, the navigation icon is moved in a first speed; and when the navigation icon is moved on a turning point of the navigation route, the navigation icon is moved in a second speed, in which the second speed is less than the first speed.

In one example of the application, the step of displaying the navigation route on the electronic map comprises only displaying a portion of the navigation route nearby the spot according to a display scale of the electronic map.

In one example of the application, the step of displaying the navigation route on the electronic map further comprises displaying a thumbnail of the navigation route on the electronic map, in which the thumbnail comprises a start point, an end point and a path of the navigation route, and comprises a mark indicating a current location of the navigation icon.

In one example of the application, the step of entering the route simulation mode comprises receiving an operation of a user for the thumbnail and activating the route simulation mode accordingly, so as to display and move the navigation icon.

In one example of the application, the step of generating the effect of moving the navigation icon along the navigation route from the spot of the navigation route further comprises receiving an operation of a user for the screen and closing the route simulation mode accordingly, so as to resume the originally displayed navigation route.

In one example of the application, the step of receiving the operation of the user for the screen comprises receiving the operation of the user for the thumbnail displayed on the screen.

In one example of the application, after the step of generating the effect of moving the navigation icon along the navigation route from the spot of the navigation route, the method further comprises closing the route simulation mode to resume the originally displayed navigation route when the navigation icon arrives at an end point of the navigation route.

In one example of the application, the step of generating the effect of moving the navigation icon along the navigation route from the spot of the navigation route comprises panning the electronic map and keeping a location of the navigation icon on the screen unchanged according to the navigation route, so as to generate the effect of moving the navigation icon along the navigation route.

In one example of the application, the method further receives information of a jammed section on the navigation route and displays the same on the electronic map, in which the step of generating the effect of moving the navigation icon along the navigation route further comprises moving the navigation icon in a third speed when the navigation icon is moved on the jammed section of the navigation route, wherein the third speed is less than the first speed.

In one example of the application, the step of displaying the navigation route on the electronic map comprises displaying the electronic map in a form of a three-dimensional bird eye view, and displaying the navigation route on the electronic map.

According to the invention, the navigation icon is displayed in a form of floating above of the navigation route.

And the step of generating the effect of moving the navigation icon in the second speed when the navigation icon is moved on the turning point of the navigation route further comprises tilting the electronic map to the right by a tilting angle when the navigation icon is moved on a left-turning point of the navigation route and tilting the electronic map to the left by the tilting angle when the navigation icon is moved on a right-turning point of the navigation route.

In one example of the application, the spot where the route simulation mode starts is the start point of the navigation route or a current location of the mobile device.

The application provides a navigation apparatus comprising a display unit, an input unit, and a processing unit. The display unit is used to display an electronic map. The input unit is used to receive an operation of a user. The processing unit is coupled to the display unit and the input unit, and is used for planning a navigation route, displaying the navigation route on the electronic map, and entering a route simulation mode to generate an effect of moving a navigation icon along the navigation route from a spot of the navigation route when the input unit receives the operation. When the navigation icon is moved on a straight path of the navigation route, the navigation icon is moved in a first speed; and when the navigation icon is moved on a turning point of the navigation route, the navigation icon is moved in a second speed, in which the second speed is less than the first speed.

The present application further provides a computer program product which comprises instructions to be loaded into a mobile device to execute following steps. A navigation route is planned and displayed on an electronic map. When a route simulation mode is entered, an effect of moving a navigation icon along the navigation route from a spot of the navigation route is generated. When the navigation icon is moved on a straight path of the navigation route, the navigation icon is moved in a first speed; and when the navigation icon is moved on a turning point of the navigation route, the navigation icon is moved in a second speed, in which the second speed is less than the first speed.

Based on the above, the method for simulating the navigation route, the navigation apparatus, and the computer program product of the application simulate the navigation route by moving a navigation icon, in which the navigation icon is moved in a faster speed when moving on a straight path and moved in a slower speed when moving on a turning point or a jammed section, such that the simulation of the navigation route may reveal actual road condition.

In order to make the aforementioned and other features and advantages of the application more comprehensible, examples accompanying figures are described in detail below.

### BRIEF DESCRIPTION OF THE DRAWINGS

The accompanying drawings are included to provide a further understanding of the application, and are incorporated in and constitute a part of this specification. The drawings illustrate examples of the application and, together with the description, serve to explain the principles of the application.

Fig. 1 is a block diagram of a navigation apparatus according to an example of the present application.

FIG. 2 is a flowchart showing a method for simulating a navigation route according to an example of the present application.

FIG. 3 is an example of navigation route simulation according to an example of the present application.

FIG. 4 is an example of navigation route simulation according to an example of the present application.

FIG. 5 is a flowchart showing a method for simulating a navigation route according to an example of the present application.

FIG. 6 is an example of navigation route simulation according to an example of the present application.

FIG. 7 is a flowchart showing a method for simulating a navigation route according to an example of the present application.

FIG. 8 is an example of navigation route simulation according to an example of the present application.

### DESCRIPTION OF EXAMPLES

The application provides users with ease to freely activate a simulation for the navigation route in the process of the navigation apparatus executing the navigation function. When simulating the navigation route, the application adaptively adjusts a moving speed of the navigation icon according to the type or the state of the path passed by the navigation icon, so as to remind the user of paying attention and to enhance the impression of the user.

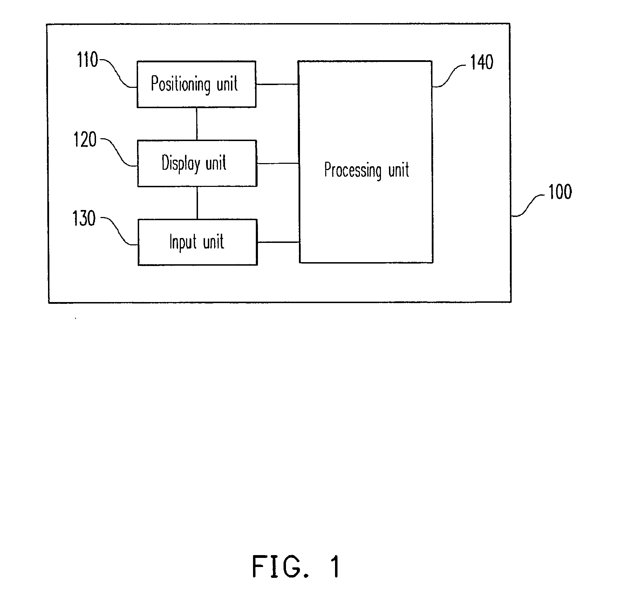

Fig. 1 is a block diagram of a navigation apparatus according to an example of the present application. Referring to FIG. 1, the navigation apparatus 100 comprises a positioning unit 110, a display unit 120, an input unit 130, and a processing unit 140, and is able to provide simulation function of the navigation route and provide users with ease to preview the navigation route. The navigation apparatus 100 is, for example, a mobile phone, a smartphone, a personal digital assistant (PDA), a PDA phone, a car PC, a notebook, a multimedia player, or a handheld gamer. The functions of aforesaid elements are respectively described as follows.

The positioning unit 110 is used for obtaining a current location of the navigation apparatus 100, and is, for example, a global positioning system (GPS), or other positioning systems using a global system for mobile communication (GSM) system, a personal handy-phone system (PHS), a code division multiple access (CDMA) system, a wireless fidelity (Wi-Fi) system, a worldwide interoperability for microwave access (WiMAX) system, a radio repeater, or a radio broadcaster for performing positioning, which is not limited by the present example.

The display unit 120 is, for example, a liquid crystal display (LCD), a light emitting diode (LED) display, an organic light emitting diode (OLED) display, a field emission display (FED), and/or other displays suitable for displaying the navigation frame.

The input unit 130 is, for example, a mouse, a keyboard, a joystick, or a touch pad, and is used for receiving an operation of a user for planning a navigation route. The input unit 130 is, for example, a resistive type, a capacitive type, or other types of touch sensitive units, and is able to be integrated with the display unit 120 to form a touch screen.

The processing unit 140 is, for example, a central processing unit (CPU), or other programmable ordinarily-used or specifically-used microprocessor, digital signal processor (DSP), programmable controller, application specific integrated circuit (ASIC), programmable logic device (PLD), or other similar devices or a combination of those devices.

The processing unit 140 is coupled to the positioning unit 110, the display unit 120 and the input unit 130, and is able to plan a navigation route according to an operation received by the input unit 130 and to execute a simulation function of the navigation route. Examples are given below for illustrating detailed steps of the navigation apparatus 100 simulating the navigation route.

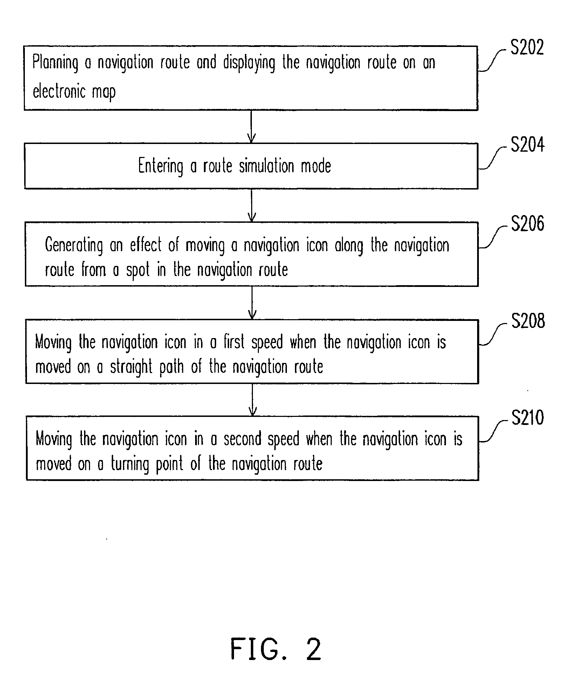

FIG. 2 is a flowchart showing a method for simulating a navigation route according to an example of the present application. Referring to FIG. 2, the method of the example is suitable for the navigation apparatus 100 in FIG. 1, and detailed steps of the navigation route simulating method of the application are described in detail below with reference to the aforesaid elements of the navigation apparatus 100.

First, the navigation apparatus 100 plans a navigation route and displays the navigation route on an electronic map by the processing unit 140 (step S202). The navigation apparatus 100, for example, displays the electronic map in a form of a three-dimensional bird eye view, and marks the navigation route on the electronic map.

In detail, the navigation apparatus 100 detects a current location thereof by using the positioning unit 110, receives a start point and an end point by using the input unit 130, and plans the navigation route by using the processing unit 140 according to the start point and the end point received by the input unit 130. The location of the start point received by the input unit 130 is, for example, the current location of the navigation apparatus 100 detected by the positioning unit 110, a coordinate entered by the user or a location of a point of interest (POI) selected from a POI list by the user. The location of the end point is, for example, a coordinate entered by the user or a location of a POI selected from a POI list by the user, which is not limited herein.

It should be noted herein that in the condition that the start point of the navigation route is far away from the end point of the navigation route, the navigation apparatus 100 has to limit the display range of the map, so as to reveal the details of the map. When displaying the navigation route, the navigation apparatus 100 may only display the navigation route nearby the current location (e.g. the location of the navigation apparatus 100).

Next, the processing unit 140 enters a route simulation mode (step S204). The processing unit 140, for example, activates the route simulation mode after the input unit 130 receives the operation of the user, in which the operation may be a pressing operation of the user performed on a physical button on the input unit 130, or a touch operation of the user performed on the input unit 130 corresponding to a virtual button or icon displayed by the display unit 120, which is not limited herein.

After the route simulation mode is entered, the processing unit 140 starts to generate an effect of moving a navigation icon along the navigation route from a spot of the navigation route (step S206). The spot where aforesaid route simulation starts is, for example, the start point of the navigation route, or a current location of the navigation apparatus 100 detected by the positioning unit 110. Further, when generating the effect of moving the navigation icon on the electronic map, the processing unit 140, for example, fixes the navigation icon on a particular location of the frame displayed by the display unit 120 (e.g. center of the lower part of the frame), and pans the electronic map according the moving direction of the navigation route, so as to generate the effect of moving the navigation icon along the navigation route. In brief, in the frame displayed by the display unit 120, the navigation icon is not moved while the electronic map is moved instead, such that a visional effect presented thereby is the navigation icon moving on the electronic map.

In the simulation of the navigation route, when the navigation icon is moved on a straight path of the navigation route, the processing unit 140 moves the navigation icon in a first speed (step S208); and when the navigation icon is moved on a turning point of the navigation route, the processing unit 140 moves the navigation icon in a second speed (step S210), in which the second speed is less than the first speed.

In detail, according to the habit of a driver, usually the driver does not pay attention to nearby road condition (or environment) when driving in a straight path and only pays attention to the nearby road condition when making a turn and meanwhile tries to find a specific target, generally a building, or a guideboard of a road, so as to make the turn. Accordingly, the application takes use of a faster speed to move the navigation icon when the simulation proceeded to the straight path, so as to increase the speed of the simulation. On the other hand, the application takes use of a slower speed to move the navigation icon when the simulation is proceeded to the turning point, so as to remind the user of paying attention and to enhance the impression of the user.

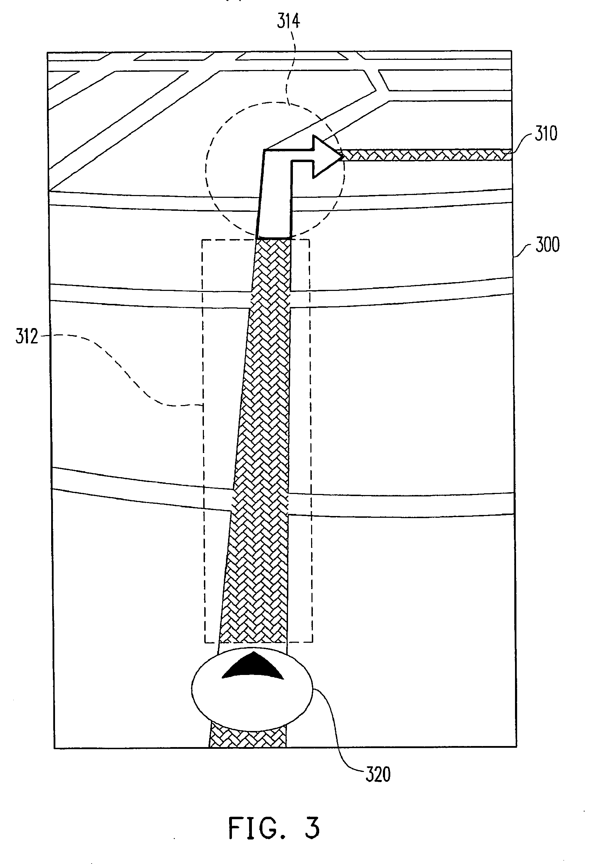

For instance, FIG. 3 is an example of navigation route simulation according to an example of the present application. Referring to FIG. 3, the navigation map 300 displays a navigation route 310 and displays a navigation icon 320 on the navigation route 310 for representing a current location of the simulation. The application further classifies the navigation route 310 into a straight path 312 and a turning point 314. When the navigation icon 320 is moved on the straight path 312, the navigation apparatus moves the navigation icon 320 in a relatively high speed; and when the navigation icon 320 is moved on the turning point 314, the navigation apparatus moves the navigation icon 320 in a relatively low speed.

It should be noted herein that when the navigation apparatus displays the electronic map in the form of the three-dimensional bird eye view, the navigation icon is, for example, displayed in a form of floating above of the navigation route. Further, when the navigation icon is moved on the turning point of the navigation route, the navigation apparatus not only adjusts the moving speed of the navigation icon to the second speed, but also adjusts a tilting angle of the electronic map, so as to simulate the navigation route through looking down from above. In detail, when the navigation icon is moved on a left-turning point, the navigation apparatus tilts the displayed electronic map to the right by a tilting angle; on the contrary, when the navigation icon is moved on a right-turning point, the navigation apparatus tilts the displayed electronic map to the left by a tilting angle.

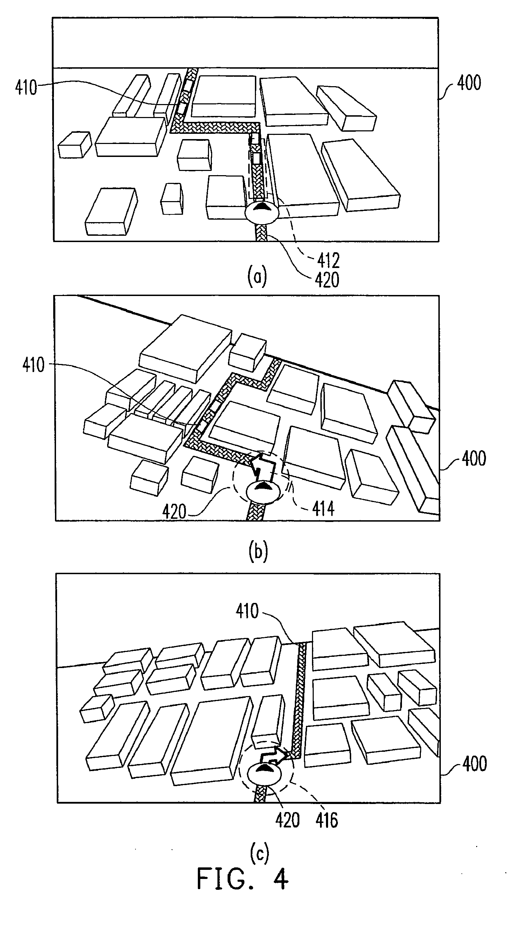

For example, FIGs. 4(a) to 4(c) illustrate an example of navigation route simulation according to an example of the present application. Referring to FIG. 4(a), the navigation map 400 is displayed in a form of a three-dimensional bird eye view, which comprises displaying a navigation route 410 and displaying a navigation icon 420 in a form of floating above of the navigation route 410. When the navigation icon 420 is moved on the straight path 412, the navigation apparatus moves the navigation icon 420 in a relatively high speed; when the navigation icon 420 is moved on the left-turning point 414, the navigation apparatus not only moves the navigation icon 420 in a relatively low speed, but also tilts the navigation map 400 to the right by a tilting angle; similarly, when the navigation icon 420 is moved on the right-turning point 416, the navigation apparatus not only moves the navigation icon 420 in a relatively low speed, but also tilts the navigation map 400 to the left by a tilting angle.

In another example, regarding the actual condition of a traffic jam, the application further marks a jammed section on the navigation route and automatically reduces the moving speed of the navigation icon when the route simulation is forward to the jammed section, so as to remind the user of paying attention. Another example is given below for further illustration.

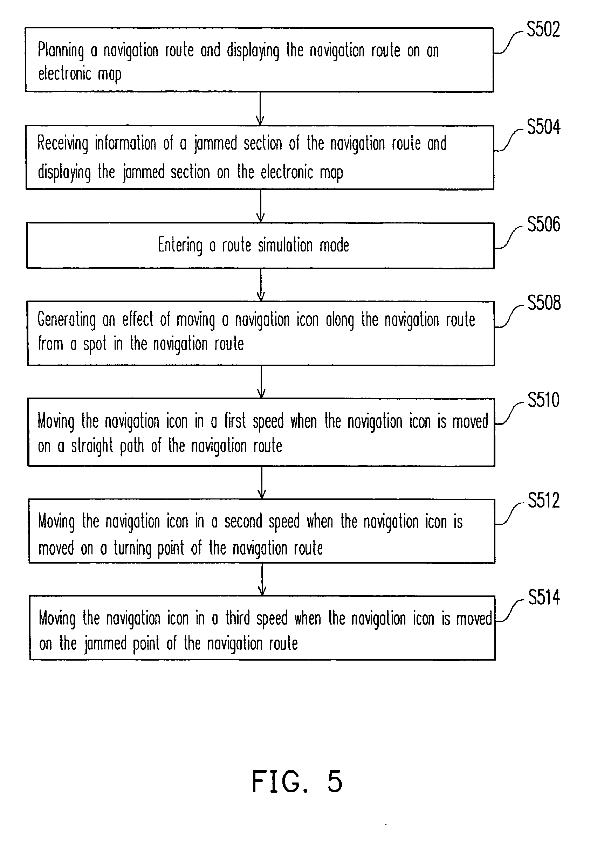

FIG. 5 is a flowchart showing a method for simulating a navigation route according to an example of the present application. Referring to FIG. 5, the method of the example is suitable for the navigation apparatus 100 in FIG. 1 and detailed steps of the navigation route simulating method of the application are described in detail below with reference to the aforesaid elements of the navigation apparatus 100.

First, the navigation apparatus 100 plans a navigation route and displays the navigation route on an electronic map by the processing unit 140 (step S502). The processing unit 140, for example, only displays a portion of the navigation route nearby a certain spot on the display unit 120 according to a display scale of the electronic map.

The difference from the aforesaid example is that, in the present example, the navigation apparatus 100 further receives information of a jammed section of the navigation route by a communication unit (not shown) and then displays the jammed section on the electronic map (step S504) after the navigation route is planned. The jammed section is, for example, marked by a preset road color or a road pattern on the navigation route, so as to provide the user to catch the actual road condition. The communication unit is, for example, a device using a GSM, PHS, CDMA, Wi-Fi, or WiMAX system for communication, which is not limited herein.

Next, the processing unit 140 determines to enter a route simulation mode according to the operation of the user received by the input unit 130 (step S506). After the route simulation mode is entered, the processing unit 140 starts to generate an effect of moving a navigation icon along the navigation route from a spot of the navigation route (step S508).

In the simulation of the navigation route, when the navigation icon is moved on a straight path of the navigation route, the processing unit 140 moves the navigation icon in a first speed (step S510); and when the navigation icon is moved on a turning point of the navigation route, the processing unit 140 moves the navigation icon in a second speed (step S512), in which the second speed is less than the first speed. The detailed content of the above steps S506-S512 are all identical or similar to the steps S204-S210 in the above example, and will not be described herein.

It should be noted herein that, in the present example, when the navigation icon is moved on the jammed section of the navigation route, the processing unit 140 moves the navigation icon in a third speed (step S514), in which the third speed is less than the first speed. In detail, the third speed may be a fixed value, which may be identical to the second speed and may be used to remind the user of noticing the road condition. In addition, the third speed may also be a variable value, which may be directly proportional to an average vehicle speed of the jammed section. That is to say, the slower the speed of traffic is, the slower the third speed of moving the navigation icon is; and the faster the speed of traffic is, the faster the third speed of moving the navigation icon is.

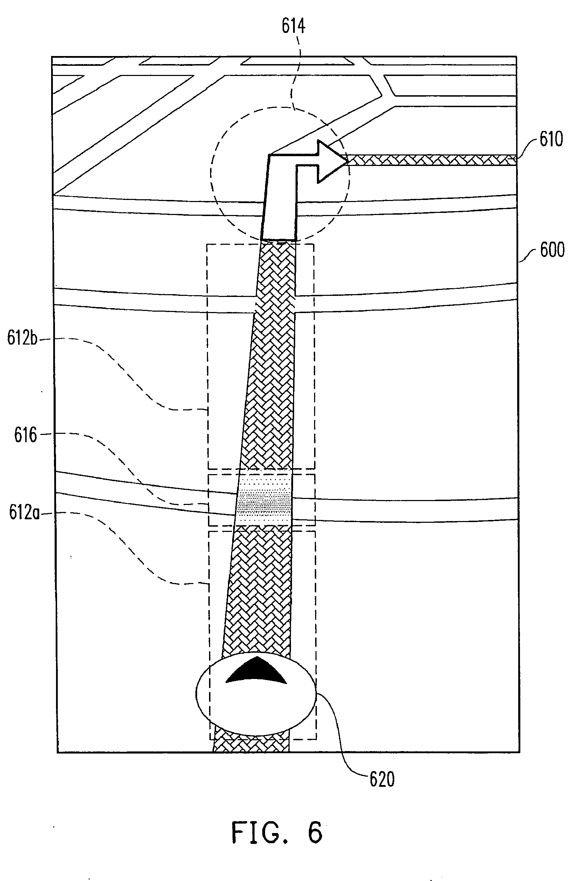

For example, FIG. 6 is an example of navigation route simulation according to an example of the present application. Referring to FIG. 6, the navigation apparatus 600 displays a navigation route 610 and displays a navigation icon 620 on the navigation route 610 for representing a current location of the simulation. The application further classifies the navigation route 610 into straight paths 612a and 612b, a turning point 614, and a jammed section 616. The jammed section 616 is presented, for example, by the weight of the color, in which a deeper color represents a slower speed and a slighter color represents a faster speed. When the navigation icon 620 is moved on the jammed section 616, the navigation apparatus moves the navigation icon 620 in a relatively low speed.

Through aforesaid navigation route simulating method, the navigation apparatus may represent the condition of the user moving on the navigation route in a most intuitive way. The navigation apparatus may emphasize relative information in simulation according to any possible needs of the user in driving on each type of paths, so as to help the user to catch the actual road condition when driving on the navigation route.

In another example, regarding the condition that the start point of the navigation route is far away from the end point of the navigation route, to provide the user with ease to check a corresponding relation between the current location and the location of the end point in the navigation process, the application further comprises displaying a thumbnail of the navigation route on the map as a reference for the user. The thumbnail may be used as a tool for the user to switch between the route simulation mode and the normal display mode. Another example is given below for further illustration.

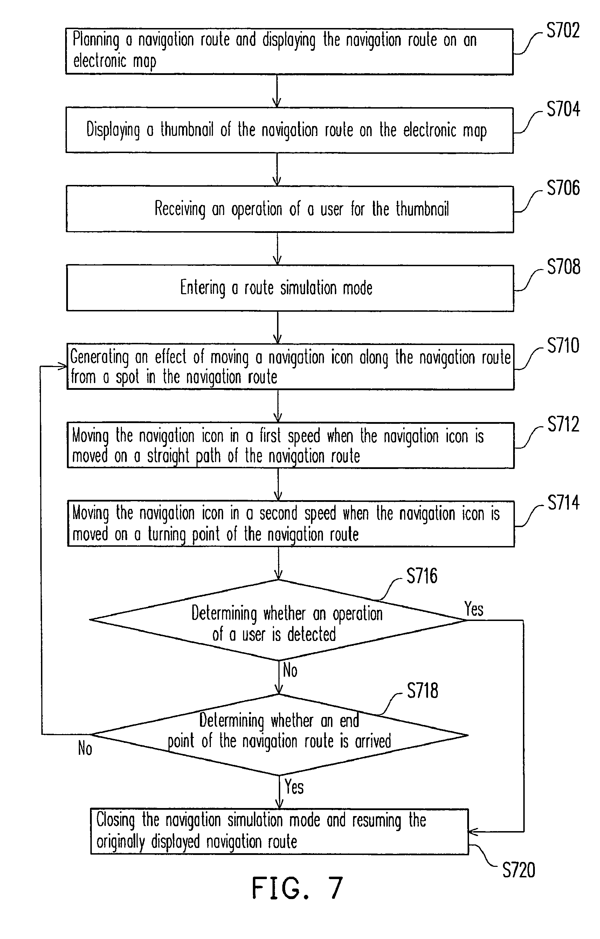

FIG. 7 is a flowchart showing a method for simulating a navigation route according to an example of the present application. Referring to FIG. 7, the method of the example is suitable for the navigation apparatus 100 in FIG. 1 and detailed steps of the navigation route simulating method of the application are described in detail below with reference to the aforesaid elements of the navigation apparatus 100.

First, the navigation apparatus 100 plans a navigation route and displays the navigation route on an electronic map by using the processing unit 140 (step S702). The processing unit 140, for example, only displays a portion of the navigation route nearby a certain spot on the display unit 120 according to a display scale of the electronic map. In addition, the processing unit 140 further displays a thumbnail of the navigation route on the display unit 120 (step S704), in which the thumbnail comprises, for example, a start point, an end point, a path of the navigation route, and a mark indicating a current location of the navigation apparatus 100.

Next, the navigation apparatus 100 receives an operation of a user for the thumbnail by using the input unit 130 (step S706), and accordingly activates a route simulation mode to display and move a navigation icon on the navigation route (step S708), so as to simulate the navigation route.

After the route simulation mode is entered, the processing unit 140 starts to generate an effect of moving a navigation icon along the navigation route from a spot of the navigation route (step S710). When the navigation icon is moved on a straight path of the navigation route, the processing unit 140 moves the navigation icon in a first speed (step S712); and when the navigation icon is moved on a turning point of the navigation route, the processing unit 140 moves the navigation icon in a second speed (step S714), in which the second speed is less than the first speed.

It should be noted herein that, in the simulation of the navigation route, the navigation apparatus 100 still keeps detecting an operation of a user for the display unit 120 or for the thumbnail displayed on the display unit 120 by using the input unit 130 (step S716). When the input unit 130 receives the operation of the user, the processing unit 140 closes the route simulation mode and resumes the originally displayed navigation route (step S720).

On the other hand, if the input unit 130 does not receive the operation of the user, the processing unit 140 further determines whether the navigation icon arrived at an end point of the navigation route (step S718). If the navigation icon has not arrived at the end point, then the process returns to step S710 to continue moving the navigation icon. However, if the input unit 130 does not receive the operation of the user in the simulation of the navigation route, then when the navigation icon arrived at the end point of the navigation route, the processing unit 140 closes the route simulation mode and resumes the originally displayed navigation route (step S720).

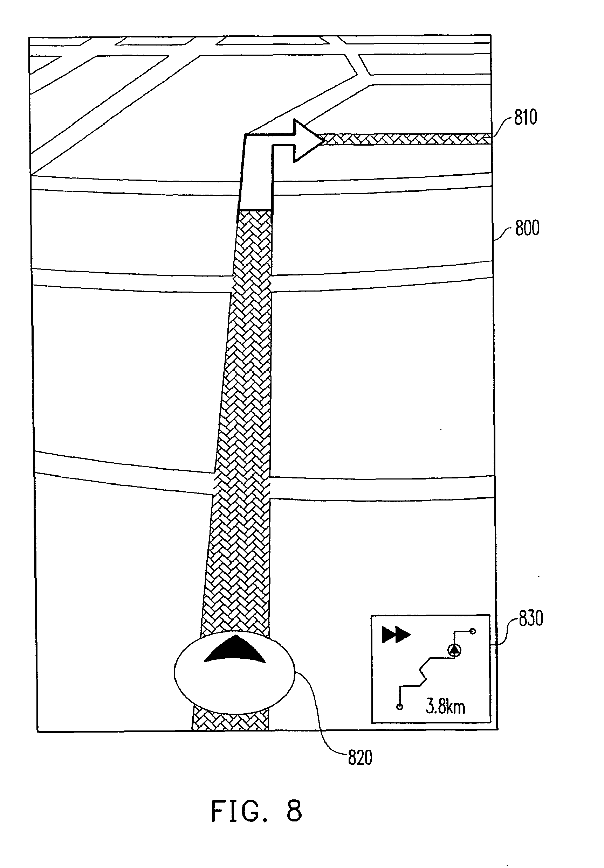

For example, FIG. 8 is an example of navigation route simulation according to an example of the present application. Referring to FIG. 8, the navigation map 800 displays a navigation route 810 and displays a navigation icon 820 on the navigation route 810 for representing a current location of the simulation. In addition, a thumbnail 830 of the navigation route 810 is further displayed on a lower right corner of the navigation map 800, in which the thumbnail 830 is drawn in simple lines and marked with a start point and an end point of the navigation route, and a location of the navigation on the navigation route, so as to be provide for the user to reference. The thumbnail 830 itself may also be a touchable screen button, such that the user only needs to touch the thumbnail 830, then the navigation apparatus activates or closes the route simulation mode correspondingly.

Through aforesaid navigation route simulation method, the navigation apparatus may provide a simple way for the user to switch between the route simulation mode and the normal display mode without affecting the user viewing the navigation route.

The present application further provides a computer program product which records a computer program to be loaded into a mobile device to execute the method for simulating the navigation route as described above. The computer program is composed of a plurality of program instructions (for example, an organization chart establishing program instruction, a table approving program instruction, a setting program instruction, and a deployment program instruction, etc), and these program instructions are loaded into the mobile device and executed by the same to accomplish various steps in the method for simulating the navigation route and various functions of the navigation apparatus described above.

In summary, the method for simulating the navigation route, the navigation apparatus, and the computer program product of the application adjust a moving speed of the navigation icon according to the type of the simulated path in the simulation of the navigation route, so as to remind the user of paying attention and to enhance the impression of the user. In addition, the application also reduces the moving speed of the navigation icon when the simulation is proceeded to a jammed section, so as to remind the user of paying attention to the road condition.
In conclusion a method for simulating a navigation route, a navigation apparatus, and a recording medium are provided. In the method, a navigation route is planned and displayed on an electronic map. When a route simulation mode is entered, an effect of a navigation icon moving along the navigation route starting from a certain spot in the navigation route is generated. When moving on a straight path of the navigation route, the navigation icon is moved in a first speed. When moving on a turning point of the navigation route, the navigation icon is moved in a second speed, in which the second speed is smaller than the first speed.

Although the application has been described with reference to the above examples, it will be apparent to one of the ordinary skill in the art that modifications to the described example may be made. Accordingly, the scope of the application will be defined by the attached claims not by the above detailed descriptions.

## Claims

1. A method for simulating a navigation route, suitable for a mobile device having a screen, the method comprising:
planning (S202) a navigation route (310, 410, 610, 810) and displaying the navigation route (310, 410, 610, 810) on an electronic map (300, 400, 600, 800);
entering (S204) a route simulation mode;
generating (S206) an effect of moving a navigation icon (320, 420, 620, 820) along the navigation route (310, 410, 610, 810) from a spot in the navigation route (310, 410, 610, 810);
moving (S208) the navigation icon (320, 420, 620, 820) in a first speed when the navigation icon (320, 420, 620, 820) is moved on a straight path (312, 412, 612a, 612b) of the navigation route (310, 410, 610, 810);
moving (S210) the navigation icon (320, 420, 620, 820) in a second speed when the navigation icon (320, 420, 620, 820) is moved on a turning point (314, 614) of the navigation route (310, 410, 610, 810), wherein the second speed is less than the first speed;
**characterized in that**
the navigation icon (320, 420, 620, 820) is displayed in a form of floating above the navigation route (310, 410, 610, 810), and the step of moving the navigation icon (320, 420, 620, 820) in the second speed when the navigation icon (320, 420, 620, 820) is moved on the turning point (314, 614) of the navigation route (310, 410, 610, 810) further comprises:
tilting the electronic map (300, 400, 600, 800) to the right by a tilting angle when the navigation icon (320, 420, 620, 820) is moved on a left-turning point (414) of the navigation route (310, 410, 610, 810); and
tilting the electronic map (300, 400, 600, 800) to the left by the tilting angle when the navigation icon (320, 420, 620, 820) is moved on a right-turning point (416) of the navigation route (310, 410, 610, 810).

2. The method of claim 1, wherein the step of displaying the navigation route (310, 410, 610, 810) on the electronic map (300, 400, 600, 800) further comprises:
displaying (S704) a thumbnail (830) of the navigation route (310, 410, 610, 810) on the electronic map (300, 400, 600, 800).

3. The method of claim 1 or 2, wherein the step of generating the effect of moving the navigation icon (320, 420, 620, 820) along the navigation route (310, 410, 610, 810) from the spot of the navigation route (310, 410, 610, 810) comprises:
according to the navigation route (310, 410, 610, 810), panning the electronic map (300, 400, 600, 800) while keeping a location of the navigation icon (320, 420, 620, 820) on the screen unchanged, to generate the effect of moving the navigation icon (320, 420, 620, 820) along the navigation route (310, 410, 610, 810).

4. The method of any one of claims 1 to 3, further comprising:
receiving (S502) information of a jammed section (616) of the navigation route (310, 410, 610, 810) and displaying the jammed section (616) on the electronic map (300, 400, 600, 800); and
moving (S514) the navigation icon (320, 420, 620, 820) in a third speed when the navigation icon (320, 420, 620, 820) is moved on the jammed section (616) of the navigation route (310, 410, 610, 810), wherein the third speed is less than the first speed.

5. The method of any one of claims 1 to 4, wherein the step of displaying the navigation route (310, 410, 610, 810) on the electronic map (300, 400, 600, 800) comprises:
displaying the electronic map (300, 400, 600, 800) in a form of a three-dimensional bird eye view , and displaying the navigation route (310, 410, 610, 810) on the electronic map (300, 400, 600, 800).

6. A computer program product, comprising instructions for being loaded into a mobile device to enable the mobile device to execute the method for operating a navigation apparatus of any one of claims 1 to 5.

7. A navigation route simulation system, comprising:
a display means configured for displaying an electronic map (300, 400, 600, 800);
an input means configured for receiving an operation of a user;
a route planning means configured for planning a navigation route (310, 410, 610, 810) and displaying the navigation route (310, 410, 610, 810) on the electronic map (300, 400, 600, 800); and
a route simulation means configured for entering a route simulation mode to generate an effect of moving a navigation icon (320, 420, 620, 820) along the navigation route (310, 410, 610, 810) from a spot of the navigation route (310, 410, 610, 810) when the input receives the operation, wherein the route simulation means is configured such that
when the navigation icon (320, 420, 620, 820) is moved on a straight path (312, 412, 612a, 612b) of the navigation route (310, 410, 610, 810), the navigation icon (320, 420, 620, 820) is moved in a first speed; and
when the navigation icon (320, 420, 620, 820) is moved on a turning point (314, 614) of the navigation route (310, 410, 610, 810), the navigation icon (320, 420, 620, 820) is moved in a second speed, wherein the second speed is less than the first speed;
**characterized in that**
the route planning means is further configured to display a thumbnail (830) of the navigation route (310, 410, 610, 810) on the electronic map (300, 400, 600, 800), and configured such that when the input means receives an operation of a user for the thumbnail (830), the route planning means activates the route simulation mode to display and move the navigation icon (320, 420, 620, 820), and in the process of the route planning means moving the navigation icon (320, 420, 620, 820) along the navigation route (310, 410, 610, 810), when the input means receives the operation of the user for the thumbnail (830) displayed on the display means, the route planning means closes the route simulation mode to resume the originally displayed navigation route (310, 410, 610, 810);
wherein the route planning means is configured to display the navigation icon (320, 420, 620, 820) in a form of floating above of the navigation route (310, 410, 610, 810), and further configured for tilting the electronic map (300, 400, 600, 800) to the right by a tilting angle when the navigation icon (320, 420, 620, 820) is moved on a left-turning point (414) of the navigation route (310, 410, 610, 810) and for tilting the electronic map (300, 400, 600, 800) to the left by the tilting angle when the navigation icon (320, 420, 620, 820) is moved on a right-turning point (416) of the navigation route (310, 410, 610, 810).

8. The navigation system of claim 7, wherein
the display means is a display unit (120), configured to display the electronic map (300, 400, 600, 800);
the input means is an input unit (130), configured to receive the operation of the user; and
the route planning means comprises a processing unit (140), coupled to the display unit (120) and the input unit (130), configured to plan the navigation route (310, 410, 610, 810), to display the navigation route (310, 410, 610, 810) on the electronic map (300, 400, 600, 800), and to enter a route simulation mode to generate the effect of moving the navigation icon (320, 420, 620, 820) along the navigation route (310, 410, 610, 810) from the spot of the navigation route (310, 410, 610, 810) when the input unit (130) receives the operation.

9. The navigation system of claim 8, wherein the system is configured such that, when the navigation icon (320, 420, 620, 820) arrives at an end point of the navigation route (310, 410, 610, 810), the processing unit (140) closes the route simulation mode to resume the originally displayed navigation route (310, 410, 610, 810).

10. The navigation system of any one of claims 8 to 9, wherein the processing unit (140) is configured for panning the electronic map (300, 400, 600, 800) while keeping a location of the navigation icon (320, 420, 620, 820) on the screen unchanged according to the navigation route (310, 410, 610, 810), to generate the effect of moving the navigation icon (320, 420, 620, 820) along the navigation route (310, 410, 610, 810).

11. The navigation system of any one of claims 8 to 10, further comprising:
a communication unit, configured to receive information of a jammed section (616) of the navigation route (310, 410, 610, 810), which is then displayed on the electronic map (300, 400, 600, 800) by the processing unit (140), wherein
the processing unit (140) is further configured for moving the navigation icon (320, 420, 620, 820) in a third speed when the navigation icon (320, 420, 620, 820) is moved on the jammed section (616) of the navigation route (310, 410, 610, 810), wherein the third speed is less than the first speed.

12. The navigation system of any one of claims 8 to 11, wherein the processing unit (140) is configured for displaying the electronic map (300, 400, 600, 800) in a form of a three-dimensional bird eye view, and for displaying the navigation route (310, 410, 610, 810) on the electronic map (300, 400, 600, 800).

## Patentansprüche

1. Verfahren zum Simulieren einer Navigationsroute, geeignet für ein mobiles Gerät mit einem Bildschirm, wobei das Verfahren umfasst:
Planen (S202) einer Navigationsroute (310, 410, 610, 810) und Anzeigen der Navigationsroute (310, 410, 610, 810) auf einer elektronischen Karte (300, 400, 600, 800);
Eintreten (S204) in einen Routen-Simulations-Modus;
Erzeugen (S206) einer Wirkung des Bewegens eines Navigations-Symbols (320, 420, 620, 820) entlang der Navigationsroute (310, 410, 610, 810) von einer Stelle in der Navigationsroute (310, 410, 610, 810) aus;
Bewegen (S208) des Navigations-Symbols (320, 420, 620, 820) in einer ersten Geschwindigkeit, wenn das Navigations-Symbol (320, 420, 620, 820) auf einer geraden Bahn wird (312, 412, 612a, 612b) der Navigationsroute (310, 410, 610, 810) bewegt wird;
Bewegen (S210) des Navigations-Symbols (320, 420, 620, 820) in einer zweiten Geschwindigkeit, wenn das Navigations-Symbol (320, 420, 620, 820) an einem Wendepunkt (314, 614) der Navigationsroute (310,410,610,810) bewegt wird, wobei die zweite Geschwindigkeit kleiner als die erste Geschwindigkeit ist;
**dadurch gekennzeichnet, dass**
das Navigations-Symbol (320, 420, 620, 820) in einer Art des Schwebens über der Navigationsroute (310, 410, 610, 810) angezeigt wird, und dass der Schritt des Bewegens des Navigations-Symbols (320, 420, 620, 820) in der zweiten Geschwindigkeit, wenn das Navigations-Symbol (320, 420, 620, 820) am Wendepunkt (314, 614) der Navigationsroute (310, 410, 610, 810) bewegt wird, ferner umfasst:
Neigen der elektronischen Karte (300, 400, 600, 800) nach rechts um einen Neigungswinkel, wenn das Navigations-Symbol (320, 420, 620, 820) an einem linken Wendepunkt (414) der Navigationsroute (310, 410, 610, 810) bewegt wird, und Neigen der elektronischen Karte (300, 400, 600, 800) nach links um den Neigungswinkel, wenn das Navigations-Symbol (320, 420, 620, 820) an einem rechten Wendepunkt (416) der Navigationsroute (310, 410, 610, 810) bewegt wird.

2. Verfahren nach Anspruch 1, wobei der Schritt zum Anzeigen der Navigationsroute (310, 410, 610, 810) auf der elektronischen Karte (300, 400, 600, 800) ferner umfasst:
Anzeigen (S704) einer Miniaturansicht (830) der Navigationsroute (310, 410, 610, 810) auf der elektronischen Karte (300, 400, 600, 800).

3. Verfahren nach Anspruch 1 oder 2, wobei der Schritt des Erzeugens einer Wirkung des Bewegens des Navigations-Symbols (320, 420, 620, 820) entlang der Navigationsroute (310, 410, 610, 810) von der Stelle der Navigationsroute (310, 410, 610, 810) aus umfasst:
es wird gemäß der Navigationsroute (310, 410, 610, 810) die elektronische Karte (300, 400, 600, 800) geschwenkt während eine Position des Navigations-Symbols (320, 420, 620, 820) auf dem Bildschirm unverändert gehalten wird, um die Wirkung der Bewegung des Navigations-Symbol (320, 420, 620, 820) entlang der Navigationsroute (310, 410, 610, 810) zu erzeugen.

4. Verfahren nach einem der Ansprüche 1 bis 3, ferner umfassend:
Empfangen (S502) von Information eines gestauten Abschnitts (616) der Navigationsroute (310, 410, 610, 810) und Anzeigen des gestauten Abschnitts (616) auf der elektronischen Karte (300, 400, 600, 800), und
Bewegen (S514) des Navigations-Symbols (320, 420, 620, 820) in einer dritten Geschwindigkeit, wenn das Navigations-Symbol (320, 420, 620, 820) auf dem gestauten Abschnitt (616) der Navigationsroute (310, 410, 610, 810) bewegt wird, wobei die dritte Geschwindigkeit geringer als die erste Geschwindigkeit ist.

5. Verfahren nach einem der Ansprüche 1 bis 4, wobei der Schritt des Anzeigens der Navigationsroute (310, 410, 610, 810) auf der elektronischen Karte (300, 400, 600, 800) umfasst:
Anzeigen der elektronischen Karte (300, 400, 600, 800) in Form einer dreidimensionalen Vogelperspektive und Anzeigen der Navigationsroute (310, 410, 610, 810) auf der elektronischen Karte (300, 400, 600, 800).

6. Computerprogramm-Produkt umfassend Anweisungen zum Hochladen in ein mobiles Gerät, um das mobile Gerät zu aktivieren, das Verfahren zum Betreiben eines Navigations-Gerätes nach einem der Ansprüche 1 bis 5 auszuführen.

7. Navigationsrouten-Simulationssystem umfassend:
eine Anzeigeeinrichtung, die zum Anzeigen einer elektronischen Karte (300, 400, 600, 800) beschaffen ist;
ein Eingabemittel, das zum Empfangen einer Bedienfunktion eines Benutzers beschaffen ist;
ein Routenplanungs-Mittel, das zur Planung einer Navigationsroute (310, 410, 610, 810) und zum Anzeigen der Navigationsroute (310, 410, 610, 8 10) auf der elektronischen Karte (300, 400, 600, 800) beschaffen ist, und
ein Routen-Simulationsmittel, das zum Eintritt in einen Routen-Simulations-Modus beschaffen ist, um eine Wirkung des Bewegens eines Navigations-Symbol (320, 420, 620, 820) entlang der Navigationsroute (310, 410, 610, 810) von einer Stelle der Navigationsroute (310, 410, 610, 810) aus zu erzeugen, wenn das Eingabemittel die Bedienfunktion empfängt, wobei der Routen-Simulations-Modus der so beschaffen ist, dass,
wenn das Navigations-Symbol (320, 420, 620, 820) auf einer geraden Bahn (312, 412, 612a, 612b) der Navigationsroute (310, 410, 610, 810) bewegt wird, das Navigations-Symbol (320, 420, 620, 820) in einer ersten Geschwindigkeit bewegt wird; und
wenn das Navigations-Symbol (320, 420, 620, 820) an einem Wendepunkt (314, 614) der Navigationsroute (310, 410, 610, 810) bewegt wird, das Navigations-Symbol (320, 420, 620, 820) in einer zweiten Geschwindigkeit bewegt wird, wobei die zweite Geschwindigkeit geringer als die erste Geschwindigkeit ist;
**dadurch gekennzeichnet, dass**
das Routenplanungs-Mittel ferner beschaffen ist, eine Miniaturansicht (830) der Navigationsroute (310, 410, 610, 810) auf der elektronischen Karte (300, 400, 600, 800) anzuzeigen, und so beschaffen ist, dass, wenn das Eingabemittel eine Bedienfunktion eines Benutzers für die Miniaturansicht (830) empfängt, das Routenplanungs-Mittel den Routen-Simulations-Modus aktiviert, um das Navigations-Symbol (320, 420, 620, 820) anzuzeigen und zu bewegen, und dass in dem Ablauf, bei dem das Routenplanungs-Mittel das Navigations-Symbols (320, 420, 620, 820) entlang der Navigationsroute (310, 410, 610, 810) bewegt, und wenn das Eingabemittel die Bedienfunktion des Benutzers für das Anzeigen der Miniaturanzeige (830) auf dem Anzeigemittel empfängt, das Routenplanungs-Mittel den Reuten-Simulationsmodus beendet, um die ursprünglich angezeigte Navigationsroute (310, 410, 610, 810) wieder zu übernehmen;
wobei das Routenplanungs-Mittel beschaffen ist, das Navigations-Symbol (320, 420, 620, 820) in einer Art des Schwebens über der Navigationsroute (310, 410, 610, 810) anzuzeigen, und ferner beschaffen ist, die elektronische Karte (300, 400, 600, 800) nach rechts um einen Neigungswinkel zu neigen, wenn das Navigations-Symbol (320, 420, 620, 820) an einem linken Wendepunkt (414) der Navigationsroute (310, 410, 610, 810) bewegt wird, und die elektronische Karte (300, 400, 600, 800) nach links um den Neigungswinkel zu neigen, wenn das Navigations-Symbol (320, 420, 620, 820) an einem rechten Wendepunkt (416) der Navigationsroute (310, 410, 610, 810) bewegt wird.

8. Navigationssystem nach Anspruch 7, wobei
das Anzeigemittel eine Anzeigeeinheit (120) ist, die beschaffen ist, die elektronische Karte (300, 400, 600, 800) anzuzeigen;
das Eingabemittel eine Eingabeeinheit (130) ist, die beschaffen ist, die Bedienfunktion des Benutzers zu empfangen, und
das Routenplanungs-Mittel eine Verarbeitungseinheit (140) aufweist, die mit der Anzeigeeinheit (120) und der Eingabeeinheit (130) verbunden ist und die beschaffen ist, die Navigationsroute (310, 410, 610, 810) zu planen, die Navigationsroute (Anzeige 310, 410, 610, 810) auf der elektronischen Karte (300, 400, 600, 800) anzuzeigen und in einen Routen-Simulations-Modus einzutreten, um die Wirkung des Bewegens des Navigations-Symbol (320, 420, 620, 820) entlang der Navigations-Route (310, 410, 610, 810) von der Stelle der Navigationsroute (310, 410, 610, 810) aus zu erzeugen, wenn die Eingabeeinheit (130) die Bedienfunktion empfängt.

9. Navigationssystem nach Anspruch 8, wobei das System derart beschaffen ist, dass, wenn das Navigations-Symbol (320, 420, 620, 820) zu einem Endpunkt der Navigationsroute (310, 410, 610, 810) gelangt, die Verarbeitungseinheit (140) den Routen-Simulations-Modus beendet, um die ursprünglich angezeigten Navigationsroute (310, 410, 610, 810) wieder zu übernehmen.

10. Navigationssystem nach einem der Ansprüche 8 bis 9, wobei die Verarbeitungseinheit (140) zum Schwenken der elektronischen Karte (300, 400, 600, 800) beschaffen ist, während sie eine Position des Navigations-Symbol (320, 420, 620, 820) unverändert auf dem Bildschirm gemäß der Navigationsroute (310, 410, 610, 810) beibehält, um die Wirkung der Bewegung des Navigations-Symbol (320, 420, 620, 820) entlang der Navigationsroute (310, 410, 610, 810) zu erzeugen.

11. Navigationssystem nach einem der Ansprüche 8 bis 10, ferner umfassend:
eine Kommunikationseinheit, die beschaffen ist, Informationen eines gestauten Abschnitts (616) der Navigationsroute (310, 410, 610, 810) zu empfangen, die dann auf der elektronischen Karte (300, 400, 600, 800) durch die Verarbeitungseinheit (140) angezeigt wird, wobei
die Verarbeitungseinheit (140) ferner beschaffen ist, das Navigations-Symbol (320, 420, 620, 820) in einer dritten Geschwindigkeit zu bewegen, wenn das Navigations-Symbol (320, 420, 620, 820) auf dem gestauten Abschnitt (616) der Navigationsroute (310, 410, 610, 810) bewegt wird, wobei die dritte Geschwindigkeit kleiner als die erste Geschwindigkeit ist.

12. Navigationssystem nach einem der Ansprüche 8 bis 11, wobei die Verarbeitungseinheit (140) zum Anzeigen der elektronischen Karte (300, 400, 600, 800) in Form einer dreidimensionalen Vogelperspektive und zum Anzeigen der Navigationsroute (310, 410, 610, 810) auf der elektronischen Karte (300, 400, 600, 800) beschaffen ist.

## Revendications

1. Procédé de simulation d'une route de navigation, approprié pour un dispositif mobile ayant un écran, le procédé comprenant :
la planification (S202) d'une route de navigation (310, 410, 610, 810) et l'affichage de la route de navigation (310, 410, 610, 810) sur une carte électronique (300, 400, 600, 800) ;
l'introduction (S204) d'un mode de simulation de route ;
la génération (S206) d'un effet de déplacement d'une icône de navigation (320, 420, 620, 820) le long de la route de navigation (310, 410, 610, 810) à partir d'un point dans la route de navigation (310, 410, 610, 810) ;
le déplacement (S208) de l'icône de navigation (320, 420, 620, 820) à une première vitesse lorsque l'icône de navigation (320, 420, 620, 820) est déplacée selon un chemin rectiligne (312, 412, 612a, 612b) de la route de navigation (310, 410, 610, 810) ;
le déplacement (S210) de l'icône de navigation (320, 420, 620, 820) à une seconde vitesse lorsque l'icône de navigation (320, 420, 620, 820) est déplacée en un point de virage (314, 614) de la route de navigation (310, 410, 610, 810), dans lequel la seconde vitesse est inférieure à la première vitesse ;
**caractérisé en ce que**
l'icône de navigation (320, 420, 620, 820) est affichée sous une forme flottante au-dessus de la route de navigation (310, 410, 610, 810), et l'étape de déplacement de l'icône de navigation (320, 420, 620, 820) à la seconde vitesse lorsque l'icône de navigation (320, 420, 620, 820) est déplacée au point de virage (314, 614) de la route de navigation (310, 410, 610, 810) comprend en outre :
l'inclinaison de la carte électronique (300, 400, 600, 800) vers la droite d'un angle d'inclinaison lorsque l'icône de navigation (320, 420, 620, 820) est déplacée en un point de virage à gauche (414) de la route de navigation (310, 410, 610, 810) ; et
l'inclinaison de carte électronique (300, 400, 600, 800) vers la gauche par un angle d'inclinaison lorsque l'icône de navigation (320, 420, 620, 820) est déplacée en un point de virage à droite (416) de la route de navigation (310, 410, 610, 810).

2. Procédé selon la revendication 1, dans lequel l'étape d'affichage de la route de navigation (310, 410, 610, 810) sur la carte électronique (300, 400, 600, 800) comprend en outre :
l'affichage (S704) d'une miniature (830) de la route de navigation (310, 410, 610, 810) sur la carte électronique (300, 400, 600, 800).

3. Procédé selon la revendication 1 ou 2, dans lequel l'étape de génération de l'effet de déplacement de l'icône de navigation (320, 520, 620, 820) le long de la route de navigation (310, 410, 610, 810) à partir du point de la route de navigation (310, 410, 610, 810) comprend :
selon la route de navigation (310, 410, 610, 810), un effet panoramique sur la carte électronique (300, 400, 600, 800) tout en maintenant inchangé un emplacement de l'icône de navigation (320, 420, 620, 820) sur l'écran, pour générer l'effet de déplacement de l'icône de navigation (320, 420, 620, 820) le long de la route de navigation (310, 410, 610, 810).

4. Procédé selon l'une quelconque des revendications 1 à 3, comprenant en outre :
la réception (S502) d'informations d'une section embouteillée (616) de la route de navigation (310, 410, 610, 810) et l'affichage de la section embouteillée (616) sur la carte électronique (300, 400, 600, 800) ; et
le déplacement (S514) de l'icône de navigation (320, 420, 620, 820) à une troisième vitesse lorsque l'icône de navigation (320, 420, 620, 820) est déplacée sur la section embouteillée (616) de la route de navigation (310, 410, 610, 810), dans laquelle la troisième vitesse est inférieure à la première vitesse.

5. Procédé selon l'une quelconque des revendications 1 à 4, dans lequel l'étape d'affichage de la route de navigation (310, 410, 610, 810) sur la carte électronique (300, 400, 600, 800) comprend :
l'affichage de la carte électronique (300, 400, 600, 800) dans une forme d'une vue d'oiseau tridimensionnelle, et l'affichage de la route de navigation (310, 410, 610, 810) sur la carte électronique (300, 400, 600, 800).

6. Produit de programme informatique, comprenant des instructions pour être chargées dans un dispositif mobile pour permettre au dispositif mobile d'exécuter le procédé pour exploiter un appareil de navigation d'une quelconque des revendications 1 à 5.

7. Système de simulation de route de navigation, comprenant :
un moyen d'affichage configuré pour afficher une carte électronique (300, 400, 600, 800) ;
un moyen d'entrée configuré pour recevoir une opération d'un utilisateur ;
un moyen de planification de route configuré pour planifier une route de navigation (310, 410, 610, 810) et afficher la route de navigation (310, 410, 610, 810) sur la carte électronique (300, 400, 600, 800) ; et
un moyen de simulation de route configuré pour introduire un mode de simulation de route pour générer un effet de déplacement d'une icône de navigation (320, 420, 620, 820) le long de la route de navigation (310, 410, 610, 810) à partir d'un point de la route de navigation (310, 410, 610, 810) lorsque l'entrée reçoit l'opération, dans lequel le moyen de simulation de route est configuré pour que :
lorsque l'icône de navigation (320, 420, 620, 820) est déplacée sur un chemin rectiligne (312, 412, 612a, 612b) de la route de navigation (310, 410, 610, 810), l'icône de navigation (320, 420, 620, 820) est déplacée à une première vitesse ; et
lorsque l'icône de navigation (320, 420, 620, 820) est déplacée en un point de virage (314, 614) de la route de navigation (310, 410, 610, 810), l'icône de navigation (320, 420, 620, 820) est déplacée à une seconde vitesse, dans laquelle la seconde vitesse est inférieure à la première vitesse ;
**caractérisé en ce que**
le moyen de planification de route est en outre configuré pour afficher une miniature (830) de la route de navigation (310, 410, 610, 810) sur la carte électronique (300, 400, 600, 800), et configuré pour que lorsque le moyen d'entrée reçoit une opération d'un utilisateur pour la miniature (830), le moyen de planification de route active le mode de simulation de route pour afficher et déplacer l'icône de navigation (320, 420, 620, 820), et dans le traitement du moyen de planification de route déplacer l'icône de navigation (320, 420, 620, 820) le long de la route de navigation (310, 410, 610, 810), lorsque le moyen d'entrée reçoit l'opération de l'utilisateur pour la miniature (830) affichée sur le moyen d'affichage, le moyen de planification de route ferme le mode de simulation de route pour reprendre une route de navigation affichée originalement (310, 410, 610, 810) ;
dans lequel le moyen de planification de route est configuré pour afficher l'icône de navigation (320, 420, 620, 820) dans une forme flottante au-dessus de la route de navigation (310, 410, 610, 810), et configuré en outre pour incliner la carte électronique (300, 400, 600, 800) vers la droite par un angle d'inclinaison lorsque l'icône de navigation (320, 420, 620, 820) est déplacée en un point de virage à gauche (414) de la route de navigation (310, 410, 610, 810) et pour incliner la carte électronique (300, 400, 600, 800) vers la gauche par l'angle d'inclinaison lorsque l'icône de navigation (320, 420, 620, 820) est déplacée en un point de virage à droite (416) de la route de navigation (310, 410, 610, 810).

8. Système de navigation selon la revendication 7, dans lequel
le moyen d'affichage est une unité d'affichage (120), configurée pour afficher la carte électronique (300, 400, 600, 800) ;
le moyen d'entrée est une unité d'entrée (130), configurée pour recevoir l'opération de l'utilisateur ; et
le moyen de planification de route comprend une unité de traitement (140), couplée une unité d'affichage (120) et l'unité d'entrée (130), configurée pour planifier la route de navigation (310, 410, 610, 810), pour afficher la route de navigation (310, 410, 610, 810) sur la carte électronique (300, 400, 600, 800), et pour entrer un mode de simulation de route pour générer l'effet de déplacement de l'icône de navigation (320, 420, 620, 820) le long de la route de navigation (310, 410, 610, 810) à partir du point de la route de navigation (310, 410, 610, 810) lorsque l'unité d'entrée (130) reçoit l'opération.

9. Système de navigation selon la revendication 8, dans lequel le système est configuré pour que, lorsque l'icône de navigation (320, 420, 620, 820) arrive à un point de fin de la route de navigation (310, 410, 610, 810), l'unité de traitement (140) ferme le mode de simulation de route pour reprendre la route de navigation originalement affichée (310, 410, 610, 810).

10. Système de navigation d'une quelconque des revendications 8 à 9, dans lequel l'unité de traitement (140) est configurée pour effectuer un effet panoramique de la carte électronique (300, 400, 600, 800) tout en maintenant inchangé un emplacement de l'icône de navigation (320, 420, 620, 820) sur l'écran selon la route de navigation (310, 410, 610, 810), pour générer l'effet de déplacement de l'icône de navigation (320, 420, 620, 820) le long de la route de navigation (310, 410, 610, 810).

11. Système de navigation selon l'une quelconque des revendications 8 à 10, comprenant en outre :
une unité de communication, configurée pour recevoir des informations d'une section embouteillée (616) de la route de navigation (310, 410, 610, 810), qui est ensuite affichée sur la carte électronique (300, 400, 600, 800) par l'unité de traitement (140), dans laquelle
l'unité de traitement (140) est en outre configurée pour déplacer l'icône de navigation (320, 420, 620, 820) dans une troisième vitesse lorsque l'icône de navigation (320, 420, 620, 820) est déplacée sur la section embouteillée (616) de la route de navigation (310, 410, 610, 810), lorsque la troisième vitesse est inférieure à la première vitesse.

12. Système de navigation selon l'une quelconque des revendications 8 à 11, dans lequel l'unité de traitement (140) est configurée pour afficher la carte électronique (300, 400, 600, 800) dans une forme d'une vue d'oiseau tridimensionnelle et pour afficher la route de navigation (310, 410, 610, 810) sur la carte électronique (300, 400, 600, 800).
